# EUROPEAN PATENT SPECIFICATION

(11) **EP 1 774 683 B1**
(45) Date of publication and mention of the grant of the patent: **03.10.2012**
(21) Application number: 05773505.2
(22) Date of filing: 20.07.2005
(51) Int. Cl.: H04J 3/26, H04L 12/56

(54) **SYSTEM AND METHOD FOR PRESERVING MULTICAST DATA FORWARDING DURING CONTROL FAILURES IN A ROUTER**
SYSTEM UND VERFAHREN ZUR AUFRECHTERHALTUNG DER MULTICAST-DATENWEITERLEITUNG WÄHREND STEUERUNGSFEHLERN IN EINEM ROUTER
SYSTEME ET PROCEDE PERMETTANT DE PRESERVER LA TRANSMISSION DE DONNEES MULTI-DIFFUSION PENDANT LES PANNES DE COMMANDE DE ROUTEUR

(30) Priority: 23.07.2004 US 897611; 23.07.2004 US 897959
(43) Date of publication of application: 18.04.2007
(73) Proprietor: Cisco Technology, Inc., San Jose, CA 95134-1706 (US)
(72) Inventor: WINDISCH, Kurt J., Florence, OR 97439 (US); LEE, WeeSan, Arcadia, CA 91006 (US); KOUVELAS, Isidoros, Milpitas, CA 95035 (US)
(74) Representative: Kazi, Ilya
(86) International application number: PCT/US2005/025704
(87) International publication number: WO 2006/014710

(56) References cited:
- EP-A2- 1 052 803
- US-A- 6 052 373
- US-A1- 2002 171 886
- US-A1- 2003 058 880
- David Ward: "Routing/Signalling Non-Stop Forwarding" February 2002 (2002-02), XP002588549 Internet Retrieved from the Internet: URL:http://www.nanog.org/meetings/nanog24/ presentations/ward.pdf [retrieved on 2010-06-23]
- N. Bhaskar et al.: "NSR Non-Stop Routing Technology" 23 December 2003 (2003-12-23), XP002588550 Internet Retrieved from the Internet: URL:http://63.111.106.66/technology/whitep apers/reliability_series/NSRTechnology.pdf [retrieved on 2010-06-23]

## Description

### FIELD OF THE INVENTION

This invention relates generally to computer networks, and more particularly, to multicast routing protocols executed by a non-stop forwarding intermediate node of a computer network.

### BACKGROUND OF THE INVENTION

Data communication in a computer network involves the exchange of data between two or more entities interconnected by communication links, segments and subnetworks. These entities are typically software processes executing on hardware computer platforms, such as end nodes and intermediate nodes. Communication software executing on the end nodes correlate and manage data communication with other end nodes. The nodes typically communicate by exchanging discrete frames or packets of data according to predefined protocols, such as the Transmission Control Protocol/Internet Protocol (TCP/IP).

An intermediate node, such as a router, may interconnect the subnetworks to extend the effective "size" of the computer network. The router executes routing protocols used to direct the transmission of data traffic between the end nodes, such as hosts. Typically, the router directs network traffic based on destination address prefixes contained in the packets, i.e., the portions of destination addresses used by the routing protocol to render routing ("next hop") decisions. Examples of such destination addresses include Internet Protocol (IP) version 4 (IPv4) and version 6 (IPv6) addresses. A prefix implies a combination of an IP address and a mask that cooperate to describe an area or range of the network that a router can reach, whereas a route implies a combination of a set of path attributes and a prefix.

Unicast data transfer (i.e., unicast forwarding) involves forwarding a data packet from a single sending process of an end node ("source") to a single receiving process of an end node ("receiver") on the computer network. Often the destination of the data packet issued by a source may be more than one, but less than all of the receivers on the network. This type of *multicast* data transfer (i.e., multicast forwarding) is typically employed to segregate communication between groups of receivers on the network. IP multicasting, in particular, may be used to disseminate data to a large group of receivers on the network.

To affect IP multicasting, the source generally specifies a destination IP address that is a multicast group address for the message and, as such, can only represent receivers of packets. The IPv4 (or IPv6) address range is subdivided into different prefixes, one of which is designated for use by IP multicast. Receivers typically notify their communication software of their desire to receive messages destined for the multicast group address; this is called "joining a multicast group". These receiving members then "listen" on the multicast address and, when a multicast message is received at a receiver, it delivers a copy of the message to each process that belongs to the group.

IP multicasting relies on (i) a group management protocol to establish and maintain local multicast group membership, and (ii) multicast routing protocols to route packets efficiently. The Internet Group Membership Protocol (IGMP) manages packet communication between hosts and their local multicast router, letting them join or leave groups. That is, IGMP is used to send a group membership message from a host to its directly connected ("last-hop") router, indicating that the host wants to join a group (address) as a receiver. Note that IGMP is an IPv4 group membership protocol; the conventional Multicast Listener Discovery (MLD) protocol is substantially similar to, and performs the same functions as, IGMP, but for IPv6. When group membership is established, multicast packets (identified by a multicast group address in the destination address field of an IP header) are forwarded between routers using multicast routing protocols.

Multicast routing protocols construct distribution trees through the network and direct multicast forwarding. The multicast distribution trees define the path that multicast traffic will take through the network to group members. These paths are based on source or shared multicast distribution trees. A multicast distribution tree is shared when any source (host) originating data traffic destined to a group address of a multicast group uses the same distribution tree to forward data to the receivers. In contrast, a source distribution tree is a separate, shortest path tree (SPT) built for each source originating traffic to the multicast group.

A rendezvous point is a specific router that is designated as the root of a shared multicast distribution tree. Each router in the network knows the identity of the rendezvous point for each multicast group because shared multicast distribution trees are rooted at the rendezvous points. An announcement protocol is typically used to select and announce rendezvous points to all routers in the network. However, an alternative to using an announcement protocol to automatically advertise rendezvous points to all routers in the network is to manually configure the identity of the rendezvous points on all of the routers. Examples of an announcement protocol include the Auto-RP multicast protocol available from Cisco Systems Inc. and the Bootstrap Router (BSR) described in *Bootstrap Router (BSR) Mechanism for PIM Sparse Mode*, Internet Engineering Task Force Internet-Draft, draft-ietf-pim-sm-bsr-03.txt, by Fenner, et al. February 2003. Examples of multicast routing protocols that use a rendezvous point include Protocol Independent Multicast-Sparse Mode (PIM-SM) and Bidirectional PIM (BIDIR-PIM) protocols. Other multicast protocols that do not require a rendezvous point include PIM dense mode (PIM-DM) and PIM source specific multicast (PIM-SSM) protocols.

IP multicast may be deployed on a computer network using a specific rendez-vous point to build a shared multicast distribution tree for a specific group falling within a destination address prefix or to build a separate SPT for each source originating traffic to the multicast group. Any group falling within a different prefix uses a different rendezvous point, i.e., a different group range-to-rendezvous point address mapping. Broadly stated, a router joins a multicast group (distribution tree) towards the rendezvous point or source. The interface on the router leading towards the rendezvous point or source is an ingress interface. Depending upon the multicast routing protocol, there is usually only one ingress interface on the router receiving multicast packets for a particular route. One or more interfaces on the router leading towards the hosts (receivers) are egress interfaces. The host (receiver) is a leaf or node on the distribution tree. Packets are sent from a source to the root (rendezvous point or source itself) of the distribution tree, where they are forwarded towards the branches and out to the nodes that represent the receivers. On each node, packets are received on the ingress interface towards the root of the tree and packets are forwarded out egress interfaces towards the receivers or nodes.

Specifically, a receiver uses IGMP to communicate a request to join a multicast group address to a last-hop router. The router communicates that request to its neighboring routers (neighbors) on the link towards the rendezvous point (for a shared tree) or source (for a SPT) using a multicast routing protocol, such as PIM. Auto-RP or BSR is used to distribute group range-to-rendezvous point address mapping configuration to all PIM-enabled routers that participate in the network topology. Collectively the routers construct a shared multicast distribution tree rooted at the rendezvous point or source for that group address and having a branch (link) that "pulls" data traffic towards the last-hop router. Note that only a single multicast router (forwarder) should forward packets for a route over a specific link of the tree.

The infrastructure of a router typically comprises functional components organized as a control plane and a data plane. The control plane includes the functional components needed to manage the traffic forwarding features of the router. These components include routing protocols, configuration information and other similar functions that determine the destinations of data packets based on information other than that contained within the packets. The data plane, on the other hand, includes functional components needed to perform forwarding operations for the packets.

For a single processor router, the control and data planes are typically implemented on the single processor. However, for some high performance routers, these planes are implemented within separate devices of the intermediate node. For example, the control plane may be implemented in a supervisor processor, whereas the data plane may be implemented within a hardware-assist device, such as a co-processor or a forwarding processor. In other words, the data plane is typically implemented in hardware that is separate from the hardware that implements the control plane.

The control plane generally tends to be more complex than the data plane in terms of the quality and quantity of software operating on the supervisor processor. Therefore, failures are more likely to occur in the supervisor processor when executing such complicated code. In order to ensure high availability in a router, it is desirable to configure the router such that if a failure arises with the control plane that requires restarting of software executing on the supervisor processor, the data plane continues to operate correctly. Restarting of control plane software may be necessary because of a failure with a routing protocol component or a software upgrade to that component. A router that is configured to enable its data plane to continue packet forwarding operations during restart of the control plane software is referred to as a non-stop forwarding (NSF) capable router.

Situations where a NSF capable router architecture is useful include both anticipated and non-anticipated failures in the control plane of the router. For example, failures in the control plane can include unanticipated or unplanned events (e.g., software crashes or hardware errors) as well as planned or anticipated events (e.g., scheduled maintenance). As for latter, assume it is desired to upgrade software running on the supervisor processor or even remove and replace that processor for service. Such an upgrade or removal/replacement may cause an interruption in one or more routing protocols, but the NSF nature of the router allows continued forwarding of data through the router.

NSF router architectures have been implemented in unicast forwarding applications to enhance router availability and avoid disruption of data connectivity. These previous implementations often require modification of unicast routing protocols to add support to NSF. For example, modifications to a known unicast routing protocol allow support for graceful restart of router protocol failures. When the router is restarted, the modified protocol allows the router to obtain information (via protocol message exchanges) with its neighbors and without the neighbors "viewing" the router as being completely down, thereby obviating any changes to the routing topology. The present invention is directed, in part, to implementing a multicast NSF router architecture without modifying existing multicast protocol definitions.

Failures or outages of hardware or software controlling a multicast router (i.e., components in the control plane, not in the path of data packets through the router) can cause multicast data packets transiting the router to be dropped without recourse. The result is loss of multicast connectivity in the network and decreased availability of the impacted router. The present invention is further directed to solving the loss of multicast data connectivity and decreased availability during control failures in a multicast router.

NSF recovery in the multicast router involves efficient restarting of a failed multicast component, such as PIM, and rebuilding of state based on conventional PIM protocol messages until all necessary information has been recovered. During NSF recovery, the control plane is typically disconnected from the data plane, which essentially "freezes" the contents of a multicast forwarding information base (MFIB) executing in the data plane of the router. That is, any changes that occur in the control plane are not communicated to the data plane and are not reflected in the current MFIB that is used for forwarding data traffic. Thus, changes to network conditions are not acted upon within the data plane for the duration of the recovery period. As a result, the MFIB "blindly" forwards data traffic through the router using the frozen contents of its forwarding table.

However certain network condition changes, such as changes in unicast forwarding, which arise during the time that the MFIB forwards data traffic using its frozen ("stale") forwarding information may cause neighbors of the router to change their multicast forwarding. Multicast protocols generally depend on the full recursive state of unicast protocols. Changes to network topology that affect unicast forwarding, such as reverse path forwarding (RPF) state, may cause the neighbors to change their multicast forwarding and begin sending multicast data traffic on a different path (link). For example, a neighbor may change its multicast forwarding so that data traffic received from the router over a particular link for a particular route is forwarded back over that link onto the same interface from which the router forwarded that traffic. This results in multiple multicast forwarders on the link, which could possibly result in the generation of duplicate packets and the formation of a multicast loop.

Multicast loops are generally much worse than unicast loops. In the case of unicast forwarding, a packet traverses a unicast loop until a router decrements a time-to-live (TTL) parameter of the packet to zero, at which time the packet is discarded. Yet in the case of multicast forwarding, each time the packet traverses a multicast loop and "hits" a router that has more than one egress interface, the packet is replicated, thereby resulting in an explosion of packets. It is thus desirable to avoid the generation of duplicate packets and the possible formation of multicast loops.

David Ward: "*Routing*/*Signalling Non-Stop Forwarding And Increased Network and Node Availability*" outlines problems with network reliability and provides a high level overview of techniques that could be considered to address those problems.

Hadriel Kaplan: "*NSR Non-Stop Routing Technology*" describes an approach for maintaining routing information on a back-up route controller, including TCP state information, to allow searches failover to the back-up route controller.

### SUMMARY OF THE INVENTION

The present invention overcomes the disadvantages of the prior art by providing a multicast non-stop forwarding (NSF) router architecture that enhances high availability of a multicast router in a computer network. The router architecture further preserves multicast data forwarding through a data plane during NSF recovery of one or more failures in a control plane of the router. As described herein, various multicast components of the router cooperate to provide a checkpointing and recovery technique of the multicast NSF architecture that enables efficient restart and recovery of the control plane failures without loss of data connectivity. These multicast components illustratively include a protocol-independent multicast (PIM) multicast routing protocol and a multicast routing information base (MRIB) in the control plane, as well as a multicast forwarding information base (MFIB) in the data plane.

Recovery in the multicast NSF router involves efficient restarting of a failed multicast component, such as PIM, and rebuilding of state based on conventional PIM protocol messages until all necessary information has been recovered. In this context, rebuilding of state denotes re-establishing communication between the recovering PIM routing protocol and its peer routing protocols executing in neighboring routers (neighbors), and exchanging multicast control messages among those protocols to enable reconstruction of a PIM topology table. To that end, the novel multicast NSF technique monitors and persistently stores, i.e., checkpoints, selective multicast state information during proper operation of the router so that the information can be subsequently retrieved and used to rebuild the contents or state of the PIM topology table of the control plane during NSF recovery. According to an aspect of the inventive technique, the selective information checkpointed by PBVI includes (i) group range-to-rendezvous point address mappings, (ii) data-driven events, and (iii) reverse path forwarding (RPF) information.

According to another aspect of the inventive technique, NSF recovery comprises a plurality of phases having an associated timing sequence that efficiently restarts the router and its constituent multicast components after a control plane failure in order to obviate packet loss. Broadly stated, the MFIB enters NSF mode during a MFIB freeze phase that "freezes" the contents of its forwarding table in response to a control plane failure, e.g., a failure to PIM, and subsequent communication disconnection between MFIB and PIM. Freezing of the MFIB preserves "stale" routes in the data plane, thereby ensuring continued multicast data flow through the router for pre-existing routes. The failed control plane component (e.g., PIM) then restarts in NSF mode within a defined period of time during a process restart phase. In a checkpointed data recovery phase, PIM replays a first portion of the checkpointed information (e.g., group range-to-rendezvous point address mapping and RPF information) before entering a protocol adjacency reestablishment phase, where PIM establishes control traffic communication (e.g., PIM hello adjacencies) with its peer routing protocols. The checkpointed data recovery phase is then reentered to replay the remaining portion of the information (e.g., data-driven events). In a MFIB refresh phase, the connection between MFIB and PIM (via MRIB) is reestablished and the contents of the MFIB forwarding table are updated. Thereafter, a NSF completion phase is entered wherein MFIB (and PIM) transition to normal mode, thereby completing NSF recovery.

A technique for preventing multiple multicast forwarders from forwarding multicast packets for a route over a link in a computer network during NSF recovery of one or more failures in a control plane of a multicast router involves the multicast router having a functional infrastructure that allows data traffic forwarding operations to continue throughout a data plane of the router in the presence of a failure and/or software restart to a multicast component, e.g., the PIM routing protocol, executing in the control plane. Another multicast component, e.g., the MFIB executing in the data plane, is configured to prevent multiple multicast forwarders due to routing changes in the network that arise during NSF recovery.

The MFIB may be embodied as one or more multicast forwarding tables that are populated with contents describing how to forward data packets through the router. Broadly stated, PIM populates an entry of the MFIB forwarding table with routing information (i.e., a route) that specifies an ingress interface on which an incoming multicast packet should be accepted, as well as a list of egress interfaces over which the incoming packet should be forwarded. In response to receiving the incoming packet from a neighbor, the MFIB performs a lookup operation into its forwarding table to find a route of an entry that matches a multicast destination address of the packet. The matching route instructs the router as to which egress interfaces the packet should be forwarded.

The condition that triggers multiple multicast forwarder prevention can be the packet arriving at the router on an egress interface of the matching route. The arrival of the multicast packet on that egress interface is a data-driven event that indicates a forwarding conflict between the matching route in the MFIB and a neighbor that also forwards packets to that interface, which may result in duplicate packets and/or multicast loops. Typically the data plane notifies the control plane of the data-driven event (via a control signal) and the control plane interprets that event in order to re-converge on the correct forwarding state. However, the control plane is disconnected from the data plane during NSF recovery and the contents of the MFIB multicast forwarding table are frozen. This forces the MFIB to forward data traffic through the router using the frozen contents of its forwarding table during NSF recovery.

Upon discovering that the incoming multicast packet is received on an egress (i.e., forwarding) interface of the router for its matching route, the MFIB halts forwarding of multicast packets over that interface for the route. Multicast packet forwarding over the egress interface may be illustratively halted by removing that interface from the route entry of the MFIB forwarding table. Specifically, the MFIB is configured to assume that the router would lose a PBVI assert protocol negotiation procedure with its neighbor if the procedure were to take place. As a result, the MFIB removes the egress interface from its list of forwarding interfaces, thereby halting the forwarding of multicast packets over that interface. In essence, since the control plane has failed and is unable to immediately negotiate a correct forwarding with the neighbor, the MFIB unilaterally halts forwarding of the packet over the egress interface for that route to avoid the possible generation of duplicate packets and/or formation of a multicast loop. After NSF and control plane recovery, the MFIB forwarding table is updated with complete forwarding (route) information. MFIB may then resume forwarding over that interface, which triggers the PIM assert protocol negotiation procedure for the route that resolves the forwarding conflict between the routers.

Advantageously, the present invention obviates the need to modify conventional multicast routing protocols and may be implemented on any subset of routers in a network. That is, the novel NSF checkpointing and recovery technique ensures that state can be rebuilt in the multicast routing protocol topology table before neighbors detect a fatal problem and time out multicast adjacency and route state, thereby leading to loss of multicast connectivity. In addition, multicast forwarding state is not modified or removed until routing protocols of the router are fully recovered and resynchronized with the neighbors. The present invention is distinguished from previous NSF solutions because it protects multicast data transfers, rather than unicast data transfers by coordinating recovery among various multicast components.

### BRIEF DESCRIPTION OF THE DRAWINGS

The above and further advantages of invention may be better understood by referring to the following description in conjunction with the accompanying drawings in which like reference numerals indicate identical or functionally similar elements:
Fig. 1 is a schematic block diagram of a computer network that can be advantageously used with the present invention;
Fig. 2 is a schematic block diagram of an embodiment of a router that may be advantageously used with the present invention;
Fig. 3 is a schematic block diagram of a conventional protocol stack, such as the Internet communications protocol stack, within the router of Fig. 2;
Fig. 4 is a schematic block diagram illustrating a functional non-stop forwarding (NSF) multicast infrastructure of the router of Fig. 2;
Fig. 5 is a schematic block diagram of an illustrative checkpointing arrangement according to the present invention;
Figs. 6A-6C are flowcharts illustrating a sequence of steps for implementing NSF recovery according to the present invention;
Fig. 7 is a schematic block diagram of an illustrative embodiment of a multicast forwarding information base (MFIB) multicast forwarding table that may be advantageously used with the present invention; and
Fig. 8 is a flowchart illustrating a sequence of steps for implementing a multiple multicast forwarder prevention technique of the present invention.

### DETAILED DESCRIPTION OF AN ILLUSTRATIVE EMBODIMENT

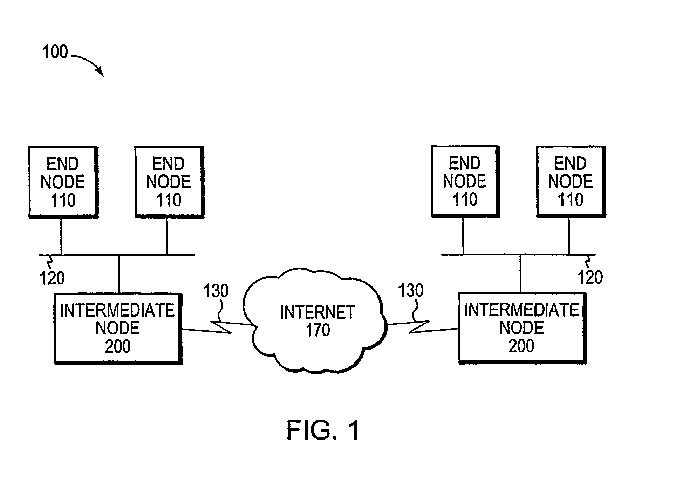

Fig. 1 is a schematic block diagram of a computer network 100 that can be advantageously used with the present invention. The computer network 100 comprises a collection of communication links, segments and subnetworks connected to a plurality of nodes, such as end nodes 110 and intermediate network nodes 200. The links, segments and subnetworks may comprise local area networks (LANs) 120, wide area networks (WANs) such as Internet 170 and WAN links 130 interconnected by intermediate nodes 200, such as network switches or routers, to form a network of computer nodes. The nodes communicate by exchanging data packets according to a predefined set of protocols, such as the Transmission Control Protocol/Internet Protocol (TCP/IP).

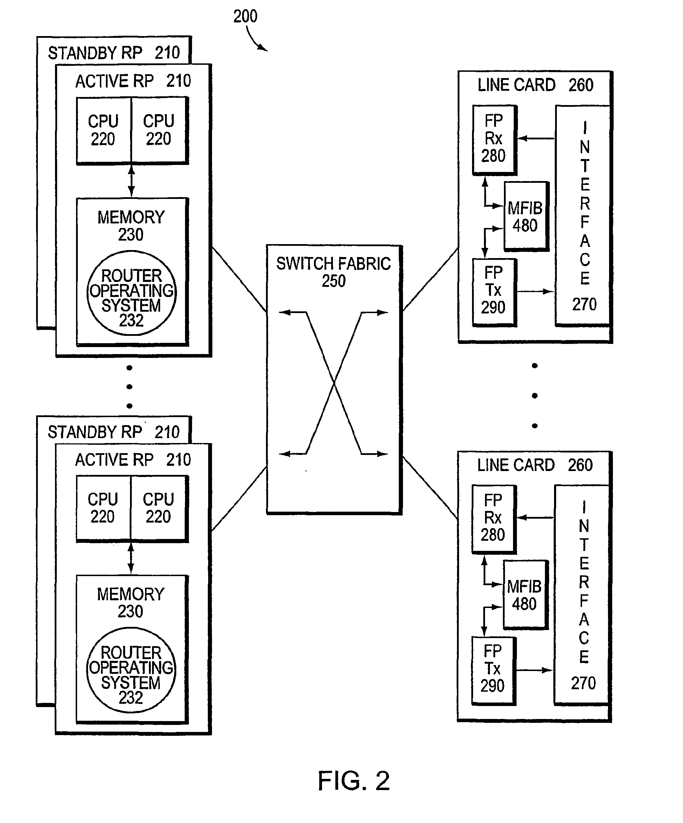

Fig. 2 is a schematic block diagram of a router, such as multicast router 200, which may be advantageously used with the present invention. The router 200 comprises a plurality of loosely coupled processors 210 connected to a plurality of ingress and egress line cards (line cards 260) via an interconnect 250 such as, e.g., a crossbar interconnection or high-speed bus. Those skilled in the art will recognize that other router platforms such as, e.g., a uniprocessor system or a plurality of independent nodes interconnected via a communications fabric as a multi-node cluster, could be used in accordance with the invention. In this context, the term "node" denotes a computer or processor complex comprising processors and an independent memory shared by the processors.

The processors 210 are illustratively route processors (RP) configured as active and standby RP pairs, with each processor having a dedicated memory 230. The memory 230 may comprise storage locations addressable by the processor for storing software programs and data structures associated with the invention. The processor 210 may comprise processing elements or logic for executing the software programs and manipulating the data structures. A router operating system 232, portions of which are typically resident in memory 230 and executed by the processor, functionally organizes the router by, *inter alia*, invoking network operations in support of software processes (described herein) executing on the processor. It will be apparent to those skilled in the art that other processor and memory means, including various computer readable media, may be used for storing and executing program instructions pertaining to the inventive architecture described herein.

In the illustrative embodiment, the line cards perform forwarding of the data traffic, while the route processors handle routing and control of the data traffic forwarding. Each route processor comprises two central processing units (CPUs 220), e.g., Power-PC 7460 chips, configured as a symmetric multiprocessing (SMP) pair. The CPU SMP pair is adapted to run a single copy of the router operating system 232 and access its memory space 230. Each line card 260 comprises an interface 270 having a plurality of ports coupled to a receive forwarding processor (FP Rx 280) and a transmit forwarding processor (FP Tx 290). The FP Rx 280 renders a forwarding decision for each packet received at the router on an ingress interface of an ingress line card in order to determine where to forward the packet. To that end, the FP Rx makes use of a multicast forwarding information base (MFIB) 480, described further herein. In the event that the packet is to be forwarded to one of the router's route processors, the FP Rx makes use of an internal FIB, IFIB, to determine to which route processor the packet should be forwarded. Likewise, the FP Tx 290 performs lookup operations (using MFIB 480) on a packet transmitted from the router via one or more egress interfaces of an egress line card.

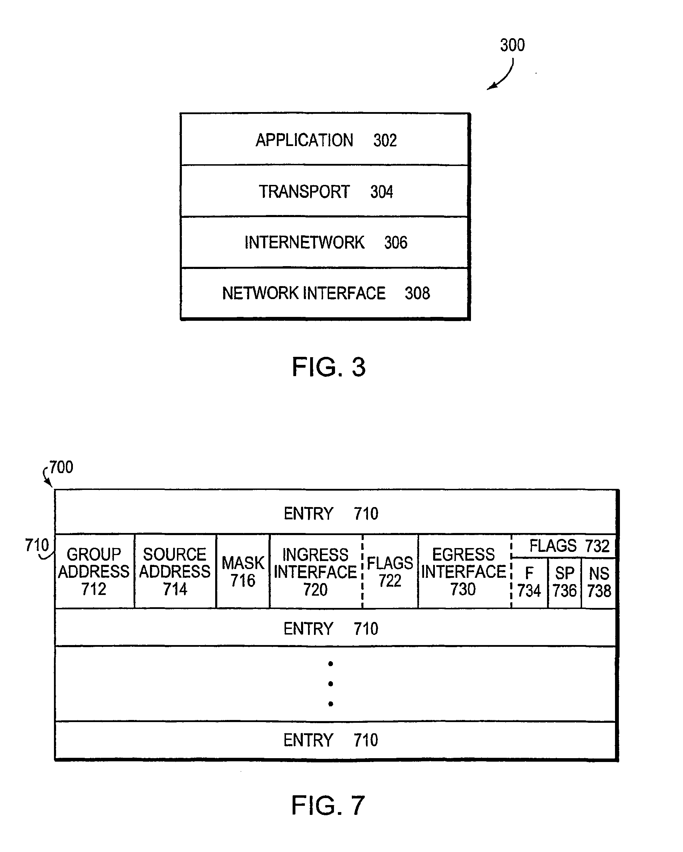

A key function of the router 200 is determining one or more interfaces to which a packet is forwarded in the router; in order to accomplish such "routing" the routers cooperate to determine best paths through the computer network 100. The routing function is preferably performed by an internetwork layer of a conventional protocol stack within each router. Fig. 3 is a schematic block diagram of a conventional network protocol stack, such as the Internet communications protocol stack 300. The architecture of the Internet protocol stack is represented by four layers termed, in ascending interfacing order, the network interface layer 308, the internetwork layer 306, the transport layer 304 and the application layer 302.

The lower network interface layer 308 is generally standardized and implemented in hardware and firmware, whereas the higher layers are typically implemented in the form of software. The primary internetwork layer protocol of the Internet architecture is the IP protocol (IP). IP is primarily a connectionless protocol that provides for internetwork routing, fragmentation and assembly of exchanged packets - generally referred to as "datagrams" in an Internet environment - and which relies on transport protocols for end-to-end reliability and other service characteristics. An example of such a transport protocol is the TCP protocol, which is implemented by the transport layer 304 and provides connection-oriented, end-to-end reliability services to the upper layer protocols of the Internet architecture. The term *TCP*/*IP* is commonly used to denote the Internet architecture.

In particular, the internetwork layer 306 is concerned with how packets are forwarded through the network, although it is not directly concerned with how the MFIBs are calculated. A multicast routing protocol may be used to perform multicast routing (for the internetwork layer) through the computer network. Examples of multicast protocols that may be advantageously used with the present invention include the Protocol Independent Multicast-Sparse Mode (PIM-SM) and PIM source specific multicast (PIM-SSM) routing protocols, along with the Internet Group Membership Protocol (IGMP). These protocols are well know and described in detail in *Protocol Independent Multicast - Sparse Mode (PIM-SM): Protocol Specification (Revised)*, Internet Engineering Task Force Internet-Draft, draft-ietf-pim-sm-v2-new-09.txt, by Fenner et al. February 2004 and *Internet Group Management Protocol, Version 3, Request for Comments (RFC)* 3376, by Cain et al., October 2002, which are hereby incorporated by reference as though fully set forth herein.

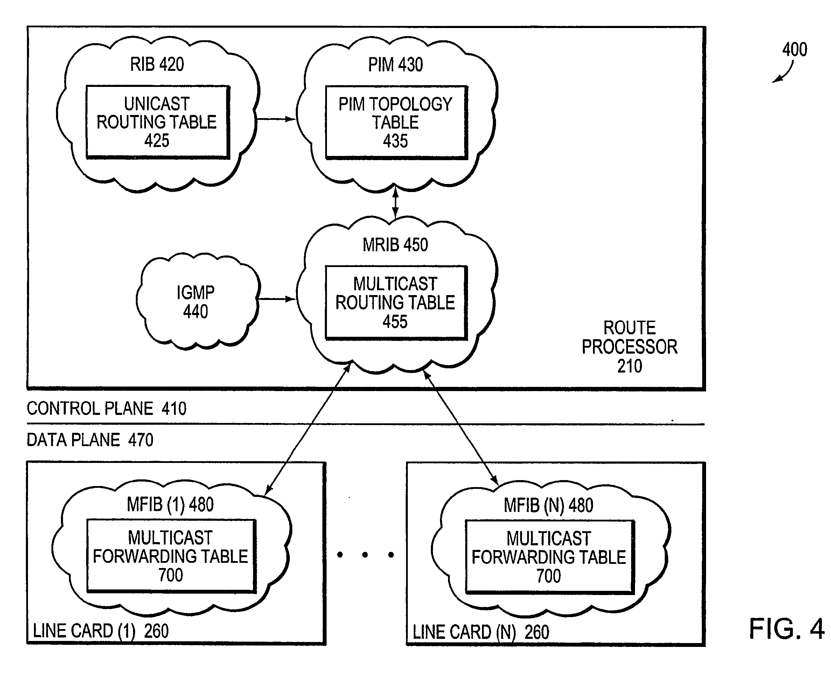

PIM relies on an underlying topology-gathering protocol to populate a unicast routing table 425 (Fig. 4) of routing information base (RIB 420) with routes. As used herein, a route comprises, *inter alia*, a combination of a set of path attributes and a prefix. The RIB stores generalized route state for those unicast routes that are needed by unicast forwarding and PIM 430. For unicast routes of interest (e.g., unicast addresses appearing as source addresses in (S,G) multicast routes and rendezvous point addresses), PIM caches information in its PIM topology table 435. The cached information includes next-hop addresses, next-hop interfaces, connected flags (indicating whether the addresses are directly connected) and metrics.

The routes in the RIB table may be provided directly from a unicast routing table or by separate routing protocols, such as the Border Gateway Protocol version 4 (BGP4) and Multi-protocol extensions to BGP4 (MBGP). BGP4 is an interdomain routing protocol used to perform interdomain routing (for the internetwork layer) through the computer network. The routers 200 (hereinafter "neighbors") exchange routing and network layer reachability information (NLRI) among autonomous systems over a reliable transport layer connection, such as TCP. An adjacency is a relationship formed between selected neighbors for the purpose of exchanging routing messages and abstracting the network topology. The BGP4 routing protocol standard is well known and described in Request For Comments (RFC) 1771, by Y. Rekhter and T. Li (1995), which is hereby incorporated by reference.

BGP4 is generally capable of only carrying routing information for IPv4; accordingly, MBGP extends BGP4 to allow carrying of routing information for multiple network layer protocols, including IPv6 addresses. MBGP extends BGP4 to associate these network layer protocols with next hop information and NLRI, including NLRI for multicast forwarding. Address Family Identifiers (AFIs) and Subsequent Address Family Identifiers (SAFIs) are used to identify the network layer protocols and the type of NLRI. MBGP and AFI/SAFI Address Family are well known and described in *RFC 2858,* by T. Bates et al. (2000) and *RFC 1700* by J. Reynolds et al (1994), which are hereby incorporated by reference.

Fig. 4 is a schematic block diagram illustrating the functional infrastructure 400 of the router 200. The functional infrastructure 400 is preferably separated into a control plane 410 and a data plane 470, wherein separation is specified in terms of software components overlayed onto hardware elements, such as the route processors 210 and line cards 260. The data plane components/elements are configured to retrieve data packets from the network and provide those packets to forwarding logic of the router (and vice versa). In contrast, the control plane components/elements are used to manage/control traffic forwarding operations of the router. The infrastructure 400 allows the router to continue performing traffic forwarding operations throughout the data plane 470 in the presence of a failure and/or software restart within the control plane 410. In essence, the infrastructure enables the router 200 to function as a non-stop forwarding (NSF) capable router.

In the illustrative embodiment, the router operating system 232 implements multicast components as separate software processes that are individually restartable and distributed over active route processors 210 and line cards 260 which, in turn, are individually hot-swapable and may have redundant (standby) backups. To that end, the data plane multicast components include MFIBs 1-N 480 executing on the line cards, whereas the control plane multicast components include the RIB 420, PIM 430, IGMP 440, a multicast RIB (MRIB 450) and a checkpoint server 460 executing on the route processors 210. Operationally, the control plane of the router builds the MRIB 450 (and, more specifically, its multicast routing table 455) after exchanging routing information with the neighbors. For example, PIM provides MRIB with a chosen reverse path forwarding (RPF) address and interface for each route, which is used by the data plane to accept packets for forwarding through the router. The primary role of the MRIB 450 is to facilitate communication between the various multicast components, i.e., coordinate distribution of state between the protocol applications (e.g., PIM, IGMP, etc.) and between these protocols and MFIB. As a result, MRIB provides the next hop router information and a multicast-capable path to each multicast destination. The MFIB 480 is derived from the MRIB and is embodied as one or more multicast forwarding tables 700 that are populated on the line cards 260 and whose contents describe how to forward data packets through the router.

The present invention is directed to a multicast NSF router architecture that enhances high availability of the router 200. The NSF router architecture leverages the functional infrastructure 400 of the router to prevent hardware or software failures in the control plane 410 from significantly disrupting the function of the data plane 470, thereby preserving multicast data forwarding during control failures. To that end, the architecture enables hardware or software components to fail while other hardware or software components enter NSF mode to continue performing their functions with minimal impact. For example, if a route processor 210 is removed from the router 200, thus taking down the entire control plane 410, the connection between MFIB 480 and MRIB 450 is broken and MFIB 480 enters NSF mode. If a single component (e.g., PIM 430) fails but the rest of the control plane, including MRIB 450, remains operational, then the connection between MRIB 450 and PIM 430 is broken and MRIB 450 will send a message to MFIB 480 instructing it to enter NSF mode.

As described herein, various multicast components of the router cooperate to provide a checkpointing and recovery technique of the multicast NSF architecture that enables efficient restart and recovery of the control plane failures without loss of data connectivity. Recovery in the multicast NSF router involves efficient restarting of a failed multicast component, such as PIM, and rebuilding of state based on conventional PIM protocol messages until all necessary information has been recovered. In this context, rebuilding of state denotes reestablishing communication between the recovering PIM routing protocol and its peer routing protocols executing in neighbors, and exchanging multicast control messages among those protocols to enable reconstruction of the PIM topology table. The PIM topology table 435 is illustratively located in a portion of memory 230 belonging to PIM and, as such, is not persistent across failures to the routing protocol. Thus when PIM restarts after a failure, its topology table is empty. As a result, the novel multicast NSF technique monitors and persistently stores, i.e., checkpoints, selective information so that the information can be efficiently retrieved and used to rebuild the contents or state of the PIM topology table during NSF recovery.

### I. Checkpointing Various Types of Information

One aspect of the invention pertains to the minimal amount of state that is checkpointed at the control plane 410 in order to implement the multicast NSF technique. As used herein, the term "checkpointing" denotes steady-state (i.e., proper operation of the router) monitoring and persistent storage of selective state of a software component, e.g., a multicast routing protocol. In particular, this aspect of the invention is directed to the definition of the type of information that is checkpointed, as well as the manner in which that information is stored. Checkpointing preferably occurs in an incremental fashion, i.e., incrementally building a backup storage of information needed by the protocol to efficiently recover after a failure. A set of databases are defined that comprises types of selective information used by the multicast protocol; these types of information are checkpointed because that information cannot be recovered fast enough through the network to enable effective multicast NSF functioning. The minimal set of multicast state is saved in a persistent location that is outside the bounds of the failure (e.g., the multicast protocol) and where the information can be efficiently retrieved during recovery.

In the illustrative embodiment, PIM is the multicast routing protocol that checkpoints the information/state databases. It should be noted that the checkpointing and recovery technique of present invention may apply to various implementations of NSF for PIM, such as NSF for PIM-SM, Bidirectional PIM (BIDIR-PIM) and PIM source specific multicast (PIM-SSM), collectively referred to herein as "PIM". The databases are illustratively stored in checkpoint tables within a portion of memory ("memory window") that is shared between two components, e.g., PIM 430 and checkpoint server 460. Storage of the multicast state databases in a shared memory window protects the databases from the failure of a multicast component (e.g., PIM) implementing NSF. Although the shared memory window is described in the illustrative embodiment, it should be noted that other persistent storage techniques and mechanisms may be used in accordance with the checkpointing aspect of the present invention.

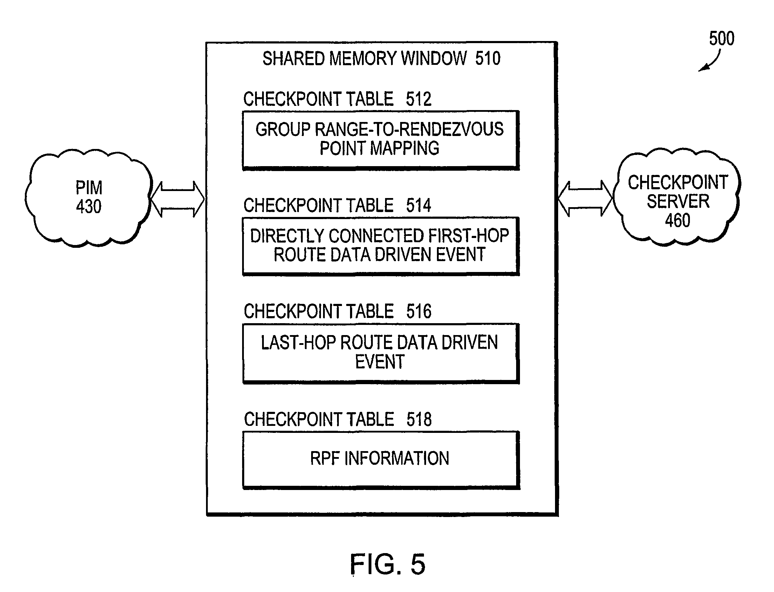

Fig. 5 is a schematic block diagram of an illustrative checkpointing arrangement 500 according to the present invention. The shared memory window 510 is preferably a portion of memory 230 on an active route processor 210 that is outside of the memory belonging to PIM. PIM 430 enters the shared memory window 510 in order to load the selective information into checkpoint tables 512-518. When PIM fails, the checkpoint server 460 persistently maintains the stored information in the window 510 until PIM restarts. In addition, the checkpoint tables are periodically copied from the active route processor to its standby route processor so that the tables are available if the entire active route processor fails. Thus, the minimal set of multicast state is stored outside of any potential failure, including the multicast software component and/or the hardware element executing the component.

It should be noted that one alternative to selective information checkpointing is to checkpoint the entire contents of the PIM topology table 435. However, the topology table contents are quite volatile, i.e., they change constantly. For a large topology table, it may be impractical to save those volatile contents fast enough to keep up with the changes and still be able to perform other required protocol processing. Even if it were practical to do so, it would be expensive (both in time and space) to save the contents of such a large table because of the additional resources (e.g., memory) required. Another approach is to save none of the PIM topology table contents. Yet, in response to a control failure and subsequent restart of the control plane, the entire contents of the topology table would have to be reconstructed, causing excessive control plane and data events for the PIM-enabled routers. This, in turn, creates chum in the network, i.e., routers other than the one experiencing the failure will notice changes in multicast routing.

Thus, this aspect of the invention identifies the minimal amount information that requires checkpointing in order to recover without losing packets, without creating churn in the network and without checkpointing all contents of the topology table. By checkpointing the minimal types of information, PIM can reestablish its final state prior to failure without having to, e.g., recreate the sequence of previous data-driven events that established that final state. This aspect of the invention also minimizes the amount of control messages that must be exchanged with neighbors after recovery. That is, the invention eliminates the chum by enabling the router to go directly to its final state without going through all intermediate states that require cooperation of its neighbors in the network. In order to build that final state, the identity of the rendezvous point must be known.

### a. Auto-RP Group-to-Rendezvous Point Mappings

According to the invention, one type of information that is checkpointed by PIM and stored in checkpoint table 512 is a mapping of group address (ranges)-to-rendezvous point addresses. Checkpointing of group range-to-rendezvous point address mapping is needed to ensure that the router 200 knows the identity of the rendez-vous point for each multicast group of receivers that desires to receive messages destined for a multicast group address. As noted, Auto-RP and BSR are announcement protocols that continuously distribute mappings between group ranges and rendezvous points to PIM-enable routers in the computer network. PIM 430 illustratively checkpoints a group range (e.g., a multicast group address and a prefix) and a rendezvous point address (i.e., the unicast IP address of the rendezvous point) for every new (current) Auto-RP or BSR group mapping that it learns.

### b. Data-Driven Events

Broadly stated, a unicast routing protocol exchanges control messages among its peers, builds a topology and populates a FIB that is used by the router to forward unicast data traffic through the router. Similarly, a multicast routing protocol exchanges control messages with its peers, builds multicast distribution trees and populates a MFIB (e.g., through the MRIB). However, the multicast routing protocol, such as PIM, does not build topology solely on the basis of control plane communication; rather, PIM requires information about packets received in the data plane to build the correct forwarding state, which MFIB uses to forward the packets. In other words, the router must often examine the data of the multicast packets it forwards and, further, must consider the arrival of a multicast packet on an interface as a control event that something "unusual" may be occurring in the network. The control event triggered by a data packet is referred to as a "data-driven" event.

A data-driven event is generally characterized by routing information stored in multicast forwarding entries of the MFIB. A multicast routing protocol populates an MFIB entry with information that specifies an ingress interface on which an incoming multicast packet should be accepted, as well as a set of egress interfaces over which the incoming packet should be forwarded. One or more control flags may be associated with each interface of the entry, wherein the control flags specify certain actions/behavior to be taken by the router in response to the reception of the incoming packet. Examples of control flags that may be advantageously used with the present invention are provided in U.S. Patent Application Serial No. 10/376,006 titled *Multicast-Routing-Protocol-Independent Realization of IP Multicast Forwarding*, by I. Kouvelas et al, filed February 28, 2003, which is hereby incorporated by reference as though fully set forth herein.

For example in response to receiving an incoming multicast packet, the router consults the MFIB to find an entry that matches the multicast destination address of the packet. The matching MFIB entry instructs the router as to which egress interfaces the packet should be forwarded. Typically, the multicast packet is accepted on a single ingress interface, i.e., the RPF interface that represents the shortest path to the source, and is forwarded out a set of egress interfaces to other destinations (routers) that have expressed interest in receiving the data traffic. In addition, the ingress interface for the matching entry may have one or more asserted control flags instructing the data plane to signal the control plane when the multicast packet is received at the router. The arrival of the multicast packet on that ingress interface is thus a data-driven event.

Data-driven events cause changes in state and control messages exchanged among a multicast routing protocol, such as PIM, executing on the router and its neighbors. In the illustrative multicast NSF router architecture, the data plane notifies the control plane of the data-driven event (via a control signal) and the control plane interprets that event in order to re-converge on the correct forwarding state. The MFIB 480 is the multicast component in the data plane 470 that notifies MRIB 450in the control plane 410 of the data-driven event. MRIB then passes that notification to PIM 430, which uses the reception of multicast data packets that are to be forwarded by the router to infer portions of the current network topology used to forward the packets. The control signal received by PIM indicates that a data-driven event occurred for a particular source and group address of a multicast data packet that was received at a particular interface of the router. Reception of a multicast packet can thus be interpreted as an event signal to modify the contents of the MFIB.

It is thus clear that data-driven events do not constitute control state exchanged among neighbors, but rather comprise knowledge obtained by snooping data traffic passing through the data plane of the router. When recovering from a failure, the multicast control plane component (e.g., the PIM routing protocol) cannot obtain knowledge of multicast data packets previously snooped by the data plane from its peers routing protocols in the neighbors. Since it must reconstruct state without relying on the data plane, PIM records (checkpoints) the occurrence of these data-driven events so that the information is readily available during NSF recovery.

According to the invention, data-driven events comprise another type of information that is checkpointed by PIM 430. In response to receiving a control signal, PIM records a tuple of information comprising source, group and ingress interface as an entry of the appropriate checkpoint table 514-516. Although the tuple is recorded for each data-driven event reported by MFIB to the control plane, it should be noted that the MFIB does not generate a data-driven event on every multicast data packet that passes through the router. In fact, the majority of packets are forwarded through the router without generating an event. Yet if one or more control flags of an entry specify that an event has occurred, the MFIB generates a control signal and sends it to the control plane, where the occurrence of that event is recorded unless it has already been checkpointed.

In the illustrative embodiment, the data-driven events are further checkpointed into two categories, e.g., directly connected first-hop (S,G) routes and last-hop (S,G) SPT routes, for storage in separate tables 514-516. The last-hop SPT routes are signals indicating that construction of a shortest path tree (SPT) from the last-hop router to the source is completed and data is now flowing on that SPT branch. These data-driven events are interpreted by PIM completely in the context of the current PIM topology table, i.e., PIM 430 uses additional information held in the topology table 435 to determine the context and type of event. The various categories of data-driven events are stored in separate checkpoint tables primarily because of the sequence in which they are replayed. During NSF recovery, the checkpoint server 460 replays the data-driven event routes at slightly different times to coordinate their flow of information into the PIM topology table with other information received by PIM from other sources.

### c. Reverse Path Forwarding (RPF) Information

In addition to Auto-RP and data-driven event signals, another type of information that is made available to PIM after restart is RPF information, e.g., addresses of previous-hop routers for sources and rendezvous points. The RPF information includes the identity of a previous-hop router, otherwise known as the RPF neighbor towards the source or rendezvous point. When a host wants to join the shortest path of a shared multicast distribution tree towards a source or rendezvous point, it needs to know the previous-hop router to which to send that join request. In unicast terminology, that router is referred to as the next-hop router, whereas in multicast terminology, it is the RPF neighbor. Thus, the unicast next-hop router is the multicast previous-hop router because the address of that router is no longer towards the destination of a unicast packet, but rather towards the source of a multicast packet.

Multicast routing protocols, such as PIM, obtain RPF information from the RIB control plane component. However, if there is a complete active route processor failure, the RIB 420 may be empty, e.g., for some time after restart. In the illustrative multicast NSF architecture, both unicast and multicast components failover from the active route processor to the standby route processor. In other words, unicast NSF is enabled for those unicast protocols which provide RPF information for multicast NSF. This prevents other routers in the network from detecting unicast routing changes, which causes them to reconverge around the failure and change their RPF information in routes, thereby increasing the potential for multicast loops. During recovery, PIM needs the RPF previous-hops for all of the sources and rendezvous points in order to rebuild the correct state of its topology table 435.

According to this aspect of the invention, minimal RPF state is made available for each source or rendezvous point address that appears in PIM topology table, i.e., the address of every source and rendezvous point, as well as their associated RPF information. RPF information generally comprises an interface and address of the previous-hop router towards some route which, in turn, may comprise the source of a session or the rendezvous point. In the illustrative embodiment, the RPF information comprises an interface, a unicast address of the previous-hop router and a unicast distance in metric; this information is made available to the control plane (PIM) through, e.g., checkpointing or other means, such as FIB lookups on a line card. As for the former, the RPF information is stored in checkpoint table 518 until the unicast routing protocols rebuild their state. Those protocols then inform PIM 430 that the unicast tables have converged and make the RPF information available to PIM via the RIB 420.

### II. Recovery

According to another aspect of the inventive technique, NSF recovery comprises a plurality of phases having an associated timing sequence that efficiently restarts the router and its constituent multicast components after a control plane failure in order to obviate packet loss. A control plane failure may take the form of single or multiple multicast components failing due to software or hardware faults, thereby triggering multicast NSF in the router to preserve forwarding state. Planned maintenance, such as software upgrades or downgrades which require component restarts or failover affecting the route processor on which multicast protocols are running, will also trigger multicast NSF during the maintenance.

Broadly stated, the MFIB enters NSF mode during a MFIB freeze phase that "freezes" the contents of its forwarding table in response to a control plane failure, e.g., a failure to PIM, and subsequent communication disconnection between MFIB and PIM. Freezing of the MFIB preserves "stale" routes in the data plane, thereby ensuring continued multicast data flow through the router for pre-existing routes. PIM (and any other failed control plane component) then restart in NSF mode within a defined period of time during a process restart phase. In a checkpointed data recovery phase, PIM replays a first portion of the checkpointed information (e.g., group range-to-rendezvous point address mapping and RPF information) before entering a protocol adjacency reestablishment phase, where PIM (re)establishes control traffic communication (e.g., PIM hello adjacencies) with its peer routing protocols. As soon as the hello adjacencies are reestablished, PIM join/prune messages begin flowing between neighbors to rebuild state on the failing router and refresh state on the neighbors. Note that such control traffic communication continues throughout NSF recovery. The checkpointed data recovery phase is then reentered to replay the remaining portion of the information (e.g., data-driven events). In a MFIB refresh phase, the connection between MFIB and PIM (via MRIB) is reestablished and the contents of the MFIB forwarding table are updated. Thereafter, a NSF completion phase is entered wherein MFIB (and PIM) transition to normal mode, thereby completing NSF recovery.

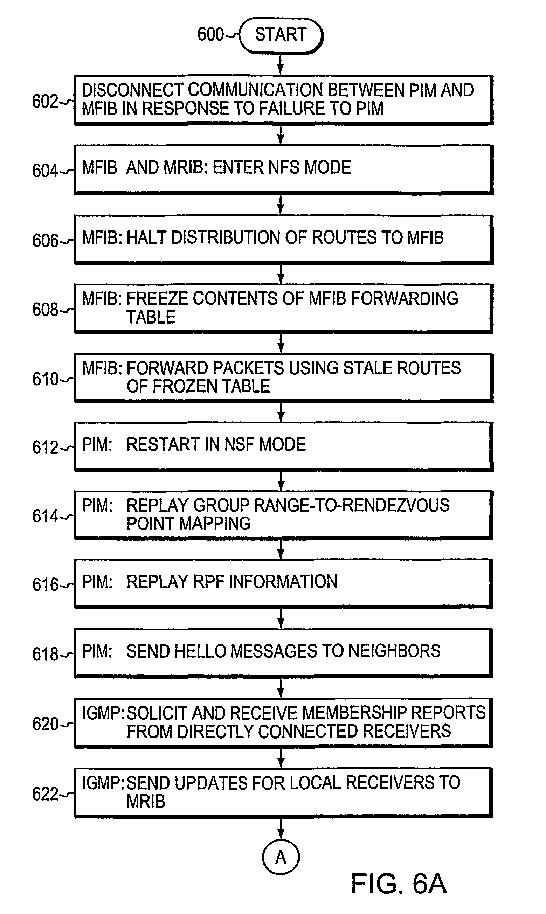

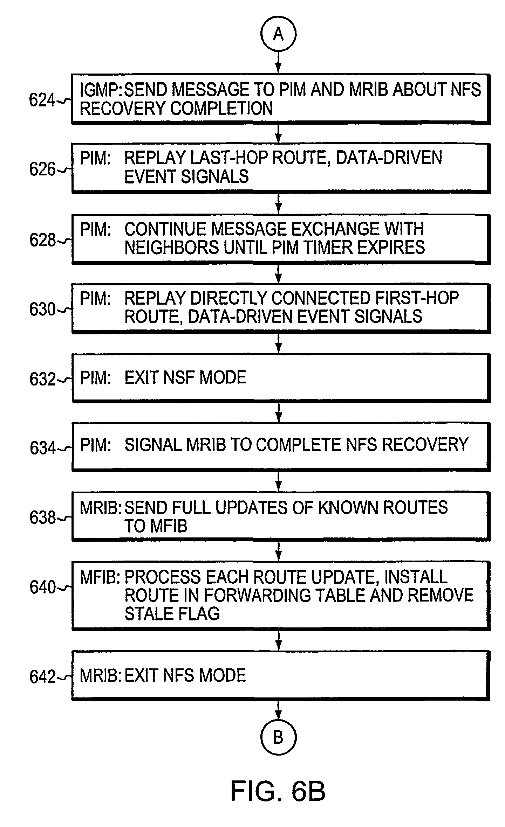

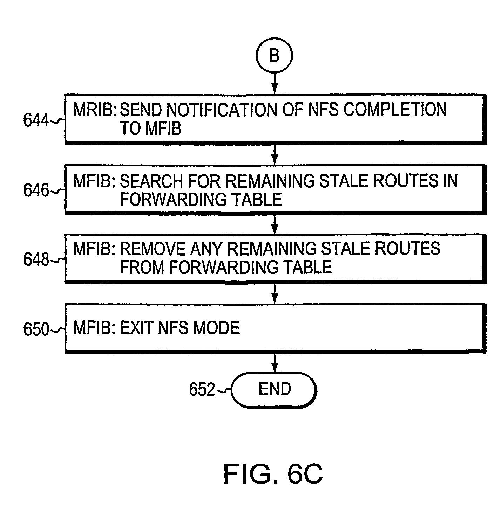

Figs. 6A-6C are flowcharts illustrating a sequence of steps for implementing NSF recovery according to the present invention. The sequence starts at Step 600 and proceeds to Step 602 where a control plane failure to a multicast component, e.g., PIM, results in a communication disconnection between MFIB and PIM. Note that the MFIB may either detect the disconnection itself or be informed of the disconnection by MRIB. In response to the failure, both MFIB and MRIB enter NSF mode in Step 604. In Step 606, MRIB halts distribution of route updates to MFIB and, in Step 608, MFIB "freezes" the contents of its forwarding table, i.e., all routes in the MFIB forwarding table are marked "stale". Note that, upon entering NSF mode, a timer for MRIB is set (e.g., 180 seconds by default).

As noted, freezing of the MFIB preserves the stale routes in the data plane, thereby ensuring that multicast packets continue to flow through the router for pre-existing routes. Accordingly, in Step 610, the MFIB continues to forward data packets through the router using those stale routes. In Step 612, the failed component (such as PIM and/or IGMP) restarts in NSF mode either on the same active route processor or on a standby route processor. Illustratively, restart of PIM and/or IGMP must happen within a certain period of time (e.g., 30 seconds). Each component must restart within that time so that it can begin communicating with its neighbors before those neighbors time out any information about the component.

As further noted, PIM checkpoints several types of information during steady-state operation, including Auto-RP group range-to-rendezvous point address mappings, RPF next-hop information and data-driven event signaled states. PIM 430 cooperates with the checkpoint server 460 to reload (replay) the selective information from each checkpoint table stored in the persistent shared memory window 510 at a different point in the NSF recovery sequence. Protocol processing, including the replay procedure, is performed by a single thread within in PIM, so table replay occurs sequentially. Specifically as part of its initialization procedure and before processing any external events, PIM replays the group range-to-rendezvous point address mapping information discovered from Auto-RP (Step 614). Replay of the contents of this checkpoint table 512 occurs as soon as the PIM restarts so that any updates, e.g., join/prune messages, received from neighbors can be used by PIM to begin immediately rebuilding state. In Step 616, PIM replays the RPF information state from the checkpoint table 518.

Thereafter, PIM begins sending PIM Hello messages on all active interfaces to reestablish adjacencies with its peer protocols in the neighbors (Step 618). For multicast NSF to succeed, these messages must be received by the neighbors before their PIM Hello timeouts expire, e.g., 105 seconds after receipt of the last Hello. An option (e.g., generation ID) of the Hello message notifies the neighbors that PIM has restarted. In response, the neighbors immediately send contents (e.g., join/prune state) of their topology tables to PIM. By promptly reestablishing PIM Hello adjacencies and control traffic, state can be repopulated in the multicast protocols (such as PIM and IGMP) without neighbors detecting a fatal problem and routing around the router 200. Since the multicast NSF router architecture attempts to recover normal protocol processing and state before the neighbors "time out" the PIM Hello neighbor adjacency, the novel technique does not require changes in the multicast routing protocols and may be implemented on any subset of routers in a network.

When restarting in NSF mode, either along with PIM or in response to notification by MRIB of NSF recovery, IGMP 440 has a period of time (e.g., 60 seconds) during which it also recovers state. In Step 620, IGMP solicits and receives membership reports from all of its directly connected receivers during this period. After the period of time, IGMP will have received the complete and current membership state and, in Step 622, sends updates to the MRIB for all local receivers. In Step 624, IGMP sends a message to PIM (via MRIB), notifying those components that its NSF recovery period is finished. By the time it receives that message, PIM has populated its topology table 435 with last-hop route signal information derived from IGMP. Since IGMP is a last-hop protocol, the last-hop route signals are relevant to routes for which the multicast router 200 is the last-hop to its directly connected receivers. Once all of the last-hop information is received from IGMP, PIM knows which receivers had connected to the router prior to the failure and can replay the data signals that are relevant to those routes. Thus, in Step 626, PIM replays the last-hop (S,G) SPT route data signals from checkpoint table 516, thereby creating the final, correct last-hop state for these routes.

In Step 628, NSF recovery continues with message exchanges among PIM neighbors until a PIM timer expires (e.g., 120 seconds by default), which signals the end of the period of time needed to receive information from the neighbors. Essentially, PIM operates normally during this time, receiving join/prune messages from its neighbors, and updates from MRIB. In response to expiration of the timer, PIM starts the final phase of its recovery, which includes replay of the directly connected first-hop (S,G) routes from checkpoint table 514 (Step 630). These directly connected first-hop signals are relevant to routes for which the multicast router 200 is the first-hop to a directly connected source. Upon replay of the first-hop signals, PIM exits NSF mode (Step 632) and signals MRIB to complete its NSF recovery (Step 634).

Note that if the PIM topology table 435 was not lost during the failure (e.g. only MRIB failed), PIM 430 signals its recovery after both (i) connecting to and fully updating the MRIB 450, and (ii) receiving notification that IGMP 440 is recovered. If the PIM topology table was lost, however, PIM will timeout its NSF mode after the 120 second timer expiration. Note also that during MRIB's timer period, protocol route updates and notifications of successful NSF recovery are redistributed normally between control plane components, which cooperatively rebuild MRIB's routing table 455. When the MRIB timer expires (or after the multicast control plane components have exited NSF mode, whichever comes first) MRIB resumes its normal operation, updating the MFIBs with any fresh routes in its table/database.

For example in response to receiving notification that PIM has completed its NSF recovery, MRIB sends full updates of all known routes to MFIB (Step 638). In Step 640, MFIB processes each route update, installs the updated route into its forwarding table and removes the stale flag on the updated route. After sending the full set of route updates to the MFIB, MRIB exits NSF mode (Step 642) and sends notification of NSF completion in the control plane to MFIB (Step 644). In response, MFIB scans its forwarding table, searching for any remaining routes that are marked stale (Step 646) and, upon discovering such routes, removes them from the table in Step 648. MFIB then exits NSF mode in Step 650. Note that if the notification signal is not received by MFIB after a predefined timeout period (e.g., 15 minutes from commencement of NSF mode), thereby indicating total control plane failure, MFIB will remove the stale routes and resume normal operation on routes, if any, that have been refreshed by MRIB. The NSF recovery sequence then ends at Step 652.

### III. High Availability

Further to the illustrative embodiment, a multicast NSF router architecture is provided that enhances high availability of the router 200. The NSF router architecture leverages the functional infrastructure 400 of the router to prevent hardware or software failures in the control plane 410 from significantly disrupting the function of the data plane 470, thereby preserving multicast data forwarding during control failures. To that end, the architecture enables hardware or software components to fail while other hardware or software components enter NSF mode to continue performing their functions with minimal impact. For example, if a route processor 210 is removed from the router 200, thus taking down the entire control plane 410, the connection between MFIB 480 and MRIB 450 is broken and MFIB 480 enters NSF mode. If a single component (e.g., PIM 430) fails but the rest of the control plane, including MRIB 450, remains operational, then the connection between MRIB 450 and PIM 430 is broken and MRIB 450 will send a message to MFIB 480 instructing it to enter NSF mode.

Various multicast components of the router cooperate to enable efficient restart and recovery of the control plane failures without loss of data connectivity. Recovery in the multicast NSF router involves efficient restarting of a failed multicast component, such as PIM, and rebuilding of state based on conventional PIM protocol messages until all necessary information has been recovered. In this context, rebuilding of state denotes reestablishing communication between the recovering PIM routing protocol and its peer routing protocols executing in neighbors, and exchanging multicast control messages among those protocols to enable reconstruction of the PIM topology table. The PIM topology table 435 is illustratively located in a portion of memory 230 belonging to PIM and, as such, is not persistent across failures to the routing protocol. Thus when PIM restarts after a failure, its topology table is empty. As a result, the multicast NSF checkpointing and recovery technique monitors and persistently stores, i.e., checkpoints, selective information so that the information can be efficiently retrieved and used to rebuild the contents or state of the PIM topology table during NSF recovery.

During NSF recovery, the control plane 410 is disconnected from the data plane 470 (e.g., there is no communication between PIM and MFIB), which essentially "freezes" the contents of the MFIB multicast forwarding table 700. That is, any changes that occur in the control plane (e.g., to the PIM topology table 435 and/or to the MRIB routing table 455) are not communicated to the data plane and, thus, are not reflected in the current MFIB that is used for forwarding data traffic. For example, updates to the control plane that occur in response to changes to network conditions, including events from multicast forwarding and/or changes in the unicast forwarding, are not acted upon within the data plane for the duration of the NSF recovery period. As a result, MFIB 480 "blindly" forwards data traffic through the router using the frozen contents of its forwarding table 700.

However certain network condition changes, such as changes in unicast forwarding, which arise during the time that the MFIB forwards data traffic using its frozen ("stale") forwarding information may cause neighbors of the router to change their multicast forwarding. Changes to network topology that affect unicast forwarding, such as RPF state, may cause the neighbors to change their multicast forwarding and begin sending multicast data traffic on a different path (link). For example, a neighbor may change its multicast forwarding so that data traffic received from the router over a particular link for a particular route is forwarded back over that link onto the same interface from which the router forwarded that traffic. This results in multiple multicast forwarders on the link, which could possibly result in the generation of duplicate packets and/or the formation of a multicast loop.

Detection of duplicate packets that could lead to formation of a multicast loop typically occurs in the control plane based on data-driven event signals from the data plane. A data-driven event is generally characterized by routing information stored in multicast forwarding entries of the MFIB forwarding table 700. Fig. 7 is a schematic block diagram of an illustrative embodiment of the MFIB multicast forwarding table 700 that may be advantageously used with the present invention. The MFIB forwarding table 700 comprises a plurality of entries 710, each of which is populated by a multicast routing protocol, such as PIM, with routing information (i.e., a route). Each entry 710 includes a group address field 712 containing a multicast group network (IP) address, a source address field 714 containing a source IP address and a mask field 716 containing a mask value indicating the number of most significant bits of the group (and source) address needed to form a prefix.

Each MFIB forwarding table entry 710 also includes an ingress interface field 720 that specifies an ingress interface on which an incoming multicast packet should be accepted, as well as an egress interface(s) field 730 containing a list of egress (forwarding) interfaces over which the incoming packet should be forwarded. One or more control flags 722, 732 may be associated with each interface of the entry, wherein the control flags specify certain actions/behavior to be taken by the router in response to the reception of the incoming packet. For example, a control flag F 734 indicates whether an accepted multicast packet matching the entry is to be forwarded over an associated interface, a control flag SP 736 is used to signal the route processor of the arrival of a multicast data packet and a control flag NS 738 is used to control the behavior of a forwarding engine (i.e., MFIB) in asserting the SP flag 736.

In response to receiving the incoming packet from a neighbor, the MFIB 480 performs a lookup into its forwarding table 700 to find a route of an entry 710 that matches a multicast destination address of the packet. The matching route instructs the router as to which egress interfaces the packet should be forwarded. For certain multicast routing protocols (such as PIM-SM and PIM-SSM), the multicast packet is typically accepted on a single ingress interface, i.e., the RPF interface that represents the shortest path to the source, and is forwarded out a set of egress interfaces to other destinations (routers) that have expressed interest in receiving the data traffic. The ingress interface 720 for the matching entry may have one or more asserted control flags 722 instructing the data plane 470 to signal the control plane 410 when the multicast packet is received at the router. The arrival of the multicast packet on that ingress interface is thus a data-driven event.

Data-driven events cause changes in state and control messages exchanged among a multicast routing protocol, such as PIM, executing on the router and its neighbors. In the illustrative multicast NSF router architecture, the data plane 470 notifies the control plane 410 of the data-driven event (via a control signal) and the control plane interprets that event in order to re-converge on the correct forwarding state. The MFIB 480 is the multicast component in the data plane that notifies MRIB 450 in the control plane of the data-driven event. MRIB then passes that notification to PIM 430, which uses the reception of multicast data packets that are to be forwarded by the router to infer portions of the current network topology used to forward the packets. The control signal received by PIM indicates that a data-driven event occurred for a particular source and group address 712, 714 of a multicast data packet that was received at a par- ticular interface of the router. Reception of a multicast packet can thus be interpreted as an event signal to modify the contents of the MFIB forwarding table 700.

### IV. Prevention of Multiple Multicast Forwarders

If a packet is received on an egress interface that is used for forwarding out of the router, the data plane (e.g., MFIB) communicates the data-driven event to the control plane (e.g., PIM). Protocol negotiation between the router and other PIM-enabled routers on the link, including the neighbor that forwarded the packet, is then used to determine which router should be forwarding traffic over the interface and link. Such protocol negotiation occurs in the control plane, requiring "live" PIM components 430 on all the routers. Here, PIM employs conventional assert messages to determine which router should be forwarding the packet over the link and which router is in error. The PIM assert protocol negotiation procedure is well-known and described in the previously incorporated Protocol Independent Multicast - Sparse Mode (PIM-SM): Protocol Specification (Revised), Internet Engineering Task Force Internet-Draft, draft-ietf-pim-sm-v2-new-09.txt. However since the data plane is dis- connected from the control plane during NSF recovery, communication between the MFIB 480 and PIM 430 is disabled, causing the MFIB to blindly forwarded traffic and possibly generate duplicate packets or even form a multicast loop.

A technique for preventing multiple multicast forwarders from forwarding multicast packets for a route over a link (e.g., of a multicast distribution tree) in a computer network during NSF recovery of one or more failures in the control plane 410 of the multicast router 200 can involve the functional infrastructure 400 of the router allows traffic forwarding operations to continue throughout the data plane 470 in the presence of a failure and/or software restart to a multicast component, e.g., PEVI 430, executing in the control plane. Another multicast component, e.g., the MFIB executing in the data plane, is configured to prevent multiple multicast forwarders due to routing changes in the network that arise due to continued use of the stale routes during NSF recovery.

The condition that triggers multiple multicast forwarder prevention is the packet arriving at the router on an egress interface of the matching route. The arrival of the multicast packet on that egress interface is a data-driven event that indicates a forwarding conflict between the matching route in the MFIB and a neighbor that also forwards packets to that interface, which may result in duplicate packets and/or multicast loops. Typically the data plane notifies the control plane of the data-driven event (via a control signal) and the control plane interprets that event in order to re-converge on the correct o forwarding state. However, as noted, the control plane is disconnected from the data plane during NSF recovery and the contents of the MFIB multicast forwarding table are frozen. This forces the MFIB to forward data traffic through the router using the frozen contents of its forwarding table during NSF recovery.

Upon discovering that the incoming multicast packet is received on an egress (i.e., forwarding) interface of the router for its matching route, the MFIB 480 halts forwarding of multicast packets over that interface for the route. Multicast packet forwarding over the egress interface may be halted by removing that interface from the route entry of the MFIB forwarding table 700. Alternatively, multicast packet forwarding may be halted by removing the F flag 734 associated with the egress interface of the route entry 710. Specifically, the MFIB is configured to assume that (function as if) the NSF router 200 would lose the PEVI assert protocol negotiation procedure with its neighbor (without performing an election) if the procedure were to take place. As a result, the MFIB illustratively removes this egress interface from its list of forwarding interfaces 730 for the route.

Note that MFIB does not remove the entire route from the forwarding table, just the forwarding state for the interface on the route. This allows the neighbor to temporarily represent a "live" branch on the multicast distribution tree. Forwarding on other egress interfaces for the route will continue uninterrupted. Moreover, receivers "downstream" of the router will continue to receive packets from the other multicast forwarder (neighbor) until the PIM assert protocol negotiation procedure takes place. In essence, since the control plane has failed and is unable to immediately negotiate a correct forwarding with the neighbor, the MFIB unilaterally halts forwarding of the packet over the egress interface for that route to avoid the possible generation of duplicate packets and/or formation of a multicast loop.

After NSF and control plane recovery, PIM 430 and MRIB 450 send their complete forwarding information to MFIB 480 to update the stale routes in the forwarding table 700. Since PEVI may not have seen the data event indicating the formation of a multicast loop, the complete updated route information will likely contain state that specifies that MFIB should be forwarding on that egress interface (even though that data event happened). When the MFIB resumes forwarding over that interface, the full PIM assert protocol negotiation message exchange is triggered (initiated) for the route among the PIM neighbors on the link to elect a router (multicast forwarder) that will forward the packet over the link, thereby resolving the forwarding conflict between the routers.

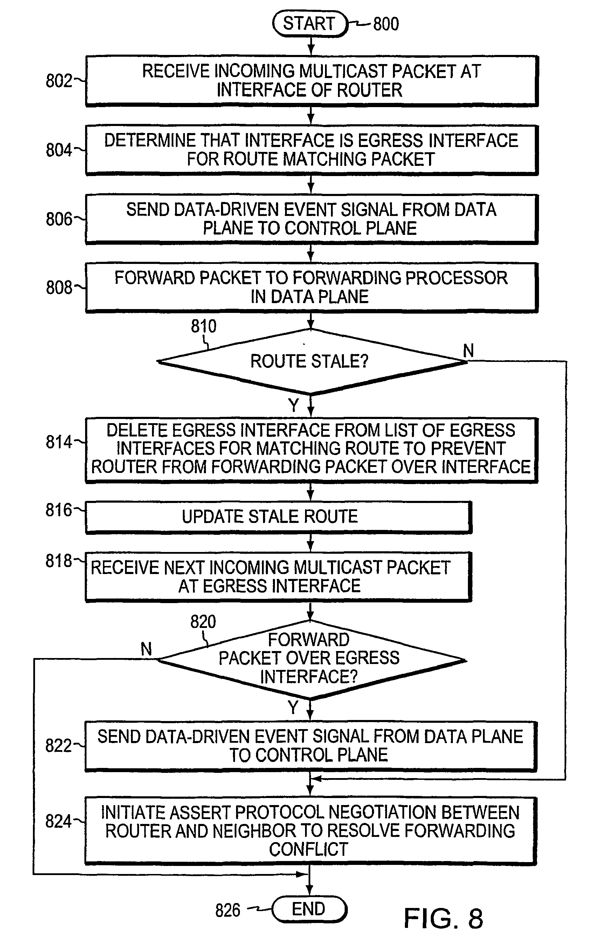

Fig. 8 is a flowchart illustrating a sequence of steps for implementing the multipie multicast forwarder prevention technique. The sequence starts at Step 800 and proceeds to Step 802 where an incoming multicast packet is received at a line card interface (in the data plane) of the router. MFIB performs a lookup into its forwarding table, matches an existing route of an entry to the packet and, in Step 804, determines that the packet was received on a line card interface that is used as an egress interface for that route. In response, MFIB generates and sends a data-driven event signal to the control plane (Step 806). Illustratively, the event signal is triggered by assertion of the F and NS flags 734, 738 on the egress interface over which the packet arrives.

In Step 808, the multicast packet is then forwarded ("punted") to the forwarding processor (FP Rx 280) in the data plane which, in Step 810, checks whether the route is stale (all routes were marked stale when NSF started). If the route is not stale (indicating that NSF recovery is not active and that the route has been updated), in Step 824, the control plane (e.g., PIM) initiates an assert protocol negotiation procedure between the router and neighbor that forwarded the packet to resolve the forwarding conflict, i.e., to determine which router should be forwarding traffic over the interface. The sequence then ends at Step 826. However, if the route is stale (thus indicating that NSF recovery is active and that the route has not been updated since a control plane failure), MFIB deletes the egress interface from the outgoing (egress) interface list for the route (Step 814), thereby preventing the router from forwarding any further packets over the interface and onto the link. Thus, the neighbor that forwarded the incoming packet to the link is the sole multicast router/forwarder forwarding packets to the link.

When NSF recovery subsequently ends, communication between the data plane and control plane is reestablished. In Step 816, the stale route in the MFIB forwarding table is updated with a "fresh" route from the recovered control plane (PIM) and the stale bit is removed from the route. In Step 818, a next incoming multicast packet is received at the egress interface and, in Step 820, a determination is made as to whether the updated route still indicates forwarding of the packet over that interface. If not, the sequence ends at Step 826; otherwise, MFIB generates and sends a data-driven event signal to the control plane (PIM) in Step 822. In response, PIM initiates the assert protocol negotiation procedure between the router and neighbor that forwarded the packet to resolve the forwarding conflict (Step 824). The sequence then ends at Step 826.

While there has been shown and described a technique for preventing multiple multicast forwarders from forwarding multicast packets for a route over a link during NSF recovery of one or more failures in a control plane of a multicast router, it is to be understood that various other adaptations and modifications may be made. For example, it should be noted that the technique may apply to any multicast routing protocol that uses only a single ingress interface per route and that utilizes control plane forwarder election. Moreover, the technique may apply to various implementations of NSF for PIM, such as NSF for PIM-SM and PIM source specific multicast (PIM-SSM).

Advantageously, the present invention obviates the need to modify conventional multicast routing protocols and may be implemented on any subset of routers in a network. That is, the novel NSF checkpointing and recovery technique ensures that state can be rebuilt in the multicast routing protocol topology table before neighbors detect a fatal problem and time out multicast adjacency and route state, thereby leading to loss of multicast connectivity. In addition, multicast forwarding state is not modified or removed until routing protocols of the router are fully recovered and resynchronized with the neighbors. The present invention is distinguished from previous NSF solutions because it protects multicast data transfers, rather than unicast data transfers by coordinating recovery among various multicast components.

The foregoing description has been directed to specific embodiments of this invention. It will be apparent, however, that other variations and modifications may be made to the described embodiments, with the attainment of some or all of their advantages. For instance, it is expressly contemplated that the teachings of this invention, including the various multicast components described herein, can be implemented as software, including a computer-readable medium having program instructions executing on a computer, hardware, firmware, or a combination thereof. In addition, it is understood that the data structures described herein can include additional information while remaining within the scope of the present invention. Accordingly this description is to be taken only by way of example.

## Claims

1. A system adapted to preserve multicast data forwarding during nonstop forwarding NSF recovery from a failure in a control plane (410) of a multicast router (400) within a computer network, the system **characterized by**:
a first multicast component adapted to monitor and persistently store selective multicast state information at the control plane during proper operation of the router (400) for subsequent retrieval and use when rebuilding contents of a topology table (435) during NSF recovery; and
one or more second multicast components adapted to cooperate with the first multicast component (460) to replay the stored selective multicast state information back to rebuild the topology table (435) as part of a NSF recovery technique for enabling efficient restart and recovery of the control plane failure without loss of data connectivity by the router (400) in the network;
wherein the selective multicast state information comprises data-driven event information (514) adapted to cause changes in state and control messages exchanged between the multicast router and its neighbors in the computer network.

2. The system of Claim 1 wherein the first multicast component is a multicast routing protocol executing in the control plane (410) of the router (400).

3. The system of Claim 2 wherein the multicast routing protocol is a protocol independent multicast PIM routing protocol (430).

4. The system of Claim 3 wherein the topology table is a PIM topology Table (435).

5. The system of Claim 1 wherein the selective multicast state information comprises group range-to-rendezvous point address mapping information (512) adapted to provide an identity of a rendezvous point for each multicast group of receivers that desires to receive messages destined for a multicast group address.

6. The system of Claim 1 wherein the selective multicast state information (518) comprises reverse path forwarding information that specifies addresses of previous-hop routers for sources and rendezvous points in the network.

7. The system of Claim 1 wherein the first multicast component is a protocol independent multicast PIM routing protocol (430) executing in the control plane (410) of the router (400) and wherein the one or more second multicast components is a multicast forwarding information base MFIB (480) executing in a data plane (470) of the router (400).

8. The system of Claim 7 wherein the NSF recovery comprises a plurality of phases having an associated timing sequence.

9. The system of Claim 8 wherein a first phase of NSF recovery comprises a MFIB freeze phase for transitioning MFIB (480) into NSF mode and for freezing contents of a MFIB forwarding table (700) to preserve stale routes in the data plane (470), thereby ensuring continued multicast data flow through the router (400) for pre-existing routes.

10. The system of Claim 9 wherein a second phase of NSF recovery comprises a process restart phase for restarting tailed control plane (410) components in NSF mode within a defined period of time.

11. The system of Claim 10 wherein the failed control plane component is the PIM routing protocol (430).

12. The system of Claim 11 wherein a third phase of NSF recovery comprises a monitoring and persistently storing data recovery phase for replaying a first portion of the selective multicast state information.

13. The system of Claim 12 wherein the first portion of the selective multicast state information comprises group range-to-rendezvous point address mapping (512) and reverse path forwarding information (518).

14. The system of Claim 12 wherein a fourth phase of NSF recovery comprises a protocol adjacency reestablishment phase for establishing control traffic communication with peer routing protocols in neighboring routers of the computer network before returning to the third phase to replay a remaining portion of the selective multicast state information.

15. The system of Claim 14 wherein the remaining portion of the selective multicast state information comprises data-driven event signals.

16. The system of Claim 14 wherein a fifth phase of NSF recovery comprises a MFIB refresh phase for establishing a communication connection between MFIB (480) and PIM (430) and for updating the contents of the MFIB forwarding table (700).

17. The system of Claim 16 wherein a sixth phase of NSF recovery comprises a NSF completion phase for transitioning MFIB (480) and PIM (430) to normal mode, thereby completing NSF recovery.

18. A method for preserving multicast data forwarding during non-stop forwarding NSF recovery from a failure in a control plane (410) of a multicast router (400) within a computer network, the method **characterized by** the steps of:
monitoring and persistently storing selective multicast state information at the control plane (410) during proper operation of the router (400) for subsequent retrieval and use when rebuilding contents of a topology table during NSF recovery; and
restarting of a failed multicast control plane component including replaying the stored selective multicast state information back to rebuild the topology table as part of a NSF recovery technique that enables efficient recovery of the control plane failure without loss of data connectivity by the router (400) in the network,
wherein the selective multicast state information comprises data-driven event information (514) that causes changes in state and control messages exchanged between the multicast router and its neighbors in the computer network.

19. The method of Claim 18 wherein the step of restarting comprises the step of providing a plurality of NSF recovery phases having associated timing sequences.

20. The method of Claim 18 wherein the selective multicast state information comprises group range-to-rendezvous point address mapping information (512) that provides an identity of a rendezvous point for each multicast group of receivers that desires to receive messages destined for a multicast group address.

21. The system of Claim 18 wherein the selective multicast state information (518) comprises reverse path forwarding information that specifies addresses of previous-hop routers for sources and rendezvous points in the network.

22. A computer program or computer readable medium containing executable program instructions for performing a method according to any one of claims 18 to 21.

## Patentansprüche

1. System, das zur Aufrechterhaltung einer Multicast-Daten-Weiterleitung während einer Non-Stop-Weiterleitungs-/NSF (nonstop forwarding)-Wiederherstellung nach einem Ausfall bzw. einer Fehlfunktion in einer Steuerebene (410) eines Multicast-Routers (400) innerhalb eines Computernetzwerks ausgelegt ist, wobei das System **gekennzeichnet ist durch**:
eine erste Multicast-Komponente, die dafür ausgelegt ist, selektive Multicast-Zustandsinformationen auf der Steuerebene während des korrekten Betriebs des Routers (400) für ein späteres Abrufen und für eine spätere Verwendung, wenn Inhalte einer Topologietabelle (435) während einer NSF-Wiederherstellung wieder aufgebaut werden, zu überwachen und ständig zu speichern; und
eine oder mehrere zweite Multicast-Komponenten, die dafür ausgelegt sind, mit der ersten Multicast-Komponente (460) zusammenzuarbeiten, um die gespeicherten selektiven Multicast-Zustandsinformationen retour wiederzugeben, um die Topologietabelle (435) wieder aufzubauen, als Teil einer NSF-Wiederherstellungstechnik zur Ermöglichung eines effizienten Neustarts und
einer effizienten Behebung der Steuerebenen-Fehlfunktion bzw. des Steuerebenen-Ausfalls ohne einen Verlust der Datenkonnektivität **durch** den Router (400) in dem Netzwerk;
wobei die selektiven Multicast-Zustandsinformationen datengesteuerte Ereignisinformationen (514) aufweisen, die dafür ausgelegt sind,
Zustandsänderungen und Steuernachrichten zu bewirken, die zwischen dem Multicast-Router und seinen Nachbarn in dem Computernetzwerk ausgetauscht werden.

2. System nach Anspruch 1, wobei die erste Multicast-Komponente ein Multicast-Routing-Protokoll ist, das in der Steuerebene (410) des Routers (400) abläuft.

3. System nach Anspruch 2, wobei das Multicast-Routing-Protokoll ein protokollunabhängiges Multicast/PIM (protocol independent multicast)-Routing-Protokoll (430) ist.

4. System nach Anspruch 3, wobei die Topologietabelle eine PIM-Topologietabelle (435) ist.

5. System nach Anspruch 1, wobei die selektiven Multicast-Zustandsinformationen Gruppenbereich-zu-Rendezvous-Punkt-Adressen-Mapping-Informationen (512) aufweisen, die dafür ausgelegt sind, eine Identität eines Rendezvous-Punkts für jede Multicast-Gruppe von Empfängern bereitzustellen, die es wünscht, Nachrichten zu empfangen, die für eine Multicast-Gruppenadresse bestimmt sind.

6. System nach Anspruch 1, wobei die selektiven Multicast-Zustandsinformationen (518) Informationen in Bezug auf die umgekehrte Weiterleitung aufweisen, die Adressen von Routern von früheren Sprüngen für Quellen und Rendezvous-Punkte im Netzwerk spezifizieren.

7. System nach Anspruch 1, wobei die erste Multicast-Komponente ein protokollunabhängiges Multicast/PIM-Routing-Protokoll (430) ist, das in der Steuerebene (410) des Routers (400) abläuft, und wobei die eine oder mehreren zweiten Multicast-Komponenten eine Multicast-Weiterleitungsinformationsbasis MFIB (multicast forwarding information base) (480) sind, die in einer Datenebene (470) des Routers (400) abläuft.

8. System nach Anspruch 7, wobei die NSF-Wiederherstellung eine Vielzahl von Phasen aufweist, die eine zugehörige zeitliche Abfolge aufweisen.

9. System nach Anspruch 8, wobei eine erste Phase der NSF-Wiederherstellung eine MFIB-Einfrierphase für den Übergang von MFIB (480) in den NSF-Modus und zum Einfrieren von Inhalten einer MFIB-Weiterleitungstabelle (700) zum Aufrechterhalten von alten Routen in der Datenebene (470) umfasst, wodurch ein fortgesetzter bzw. kontinuierlicher Multicast-Datenstrom durch den Router (400) für vorher existierende Routen gewährleistet wird.

10. System nach Anspruch 9, wobei eine zweite Phase der NSF-Wiederherstellung eine Prozessneustartphase zum Neustarten von ausgefallenen Komponenten der Steuerebene (410) im NSF-Modus innerhalb eines definierten Zeitraums umfasst.

11. System nach Anspruch 10, wobei die ausgefallene Komponente der Steuerebene das PIM-Routing-Protokoll (430) ist.

12. System nach Anspruch 11, wobei eine dritte Phase der NSF-Wiederherstellung eine Phase zur Wiederherstellung von überwachten und ständig gespeicherten Daten für das Wiedergeben eines ersten Teils der selektiven Multicast-Zustandsinformationen umfasst.

13. System nach Anspruch 12, wobei der erste Teil der selektiven Multicast-Zustandsinformationen Gruppenbereich-zu-Rendezvous-Punkt-Adressen-Mapping-Informationen (512) und Informationen (518) in Bezug auf die umgekehrte Weiterleitung umfasst.

14. System nach Anspruch 12, wobei eine vierte Phase der NSF-Wiederherstellung eine Protokoll-Nachbarschaft-Wiederherstellungsphase zum Herstellen einer Steuerverkehr-Kommunikation mit Peer-Routing-Protokollen in benachbarten Routern des Computernetzwerks umfasst, bevor zu der dritten Phase zurückgekehrt wird, um einen restlichen Teil der selektiven Multicast-Zustandsinformationen wiederzugeben.

15. System nach Anspruch 14, wobei der restliche Teil der selektiven Multicast-Zustandsinformationen datengesteuerte Ereignissignale aufweist.

16. System nach Anspruch 14, wobei eine fünfte Phase der NSF-Wiederherstellung eine MFIB-Auffrischungsphase zum Herstellen einer Kommunikationsverbindung zwischen MFIB (480) und PIM (430) und zum Aktualisieren der Inhalte der MFIB-Weiterleitungstabelle (700) umfasst.

17. System nach Anspruch 16, wobei eine sechste Phase der NSF-Wiederherstellung eine NSF-Abschlussphase für den Übergang von MFIB (480) und PIM (430) in den normalen Modus umfasst, wodurch die NSF-Wiederherstellung abgeschlossen wird.

18. Verfahren zur Aufrechterhaltung der Multicast-Daten-Weiterleitung während einer Non-Stop-Weiterleitungs-/NSF-Wiederherstellung nach einem Ausfall bzw. einer Fehlfunktion in einer Steuerebene (410) eines Multicast-Routers (400) innerhalb eines Computernetzwerks, wobei das Verfahren durch die folgenden Schritte gekennzeichnet ist:
Überwachen und ständiges Speichern von selektiven Multicast-Zustandsinformationen in der Steuerebene (410) während eines korrekten Betriebs des Routers (400) für ein späteres Abrufen und für eine spätere Verwendung, wenn Inhalte einer Topologietabelle während einer NSF-Wiederherstellung wieder aufgebaut werden; und
Neustarten einer ausgefallenen Multicast-Steuerebenen-Komponente, das das Wiedergeben der gespeicherten selektiven Multicast-Zustandsinformationen retour umfasst, um die Topologietabelle wieder aufzubauen, als Teil einer NSF-Wiederherstellungstechnik, die eine effiziente Behebung der Steuerebenen-Fehlfunktion bzw. des Steuerebenen-Ausfalls ohne einen Verlust der Datenkonnektivität durch den Router (400) im Netzwerk ermöglicht, wobei die selektiven Multicast-Zustandsinformationen datengesteuerte Ereignisinformationen (514) aufweisen, die Zustandsänderungen und Steuernachrichten bewirken, die zwischen dem Multicast-Router und seinen Nachbarn in dem Computernetzwerk ausgetauscht werden.

19. Verfahren nach Anspruch 18, wobei der Schritt des Neustartens den Schritt des Bereitstellens einer Vielzahl von NSF-Wiederherstellungsphasen umfasst, die zugehörige zeitliche Abfolgen aufweisen.

20. Verfahren nach Anspruch 18, wobei die selektiven Multicast-Zustandsinformationen Gruppenbereich-zu-Rendezvous-Punkt-Adressen-Mapping-Informationen (512) umfassen, die eine Identität eines Rendezvous-Punkts für jede Multicast-Gruppe von Empfängern bereitstellen, die es wünscht, Nachrichten zu empfangen, die für eine Multicast-Gruppenadresse bestimmt sind.

21. System nach Anspruch 18, wobei die selektiven Multicast-Zustandsinformationen (518) Informationen in Bezug auf die umgekehrte Weiterleitung umfassen, die Adressen von Routern früherer Sprünge für Quellen und Rendezvous-Punkte im Netzwerk spezifizieren.

22. Computerprogramm oder computerlesbares Medium, das ausführbare Programmbefehle zum Durchführen eines Verfahrens nach einem der Ansprüche 18 bis 21 enthält.

## Revendications

1. Système adapté pour préserver le transfert de données multi-diffusion lors de la récupération NSF de transfert en continu après une panne dans un plan de commande (410) d'un routeur de multi-diffusion (400) dans un réseau informatique, le système étant **caractérisé par** :
un premier composant de multi-diffusion adapté pour surveiller et stocker de façon permanente des informations d'état de multi-diffusion sélectives au niveau du plan de commande pendant le fonctionnement correct du routeur (400) pour une récupération et une utilisation ultérieures lors de la reconstruction du contenu d'une table de topologie (435) pendant une récupération NSF ; et
un ou plusieurs composants secondaires de multi-diffusion adaptés pour coopérer avec le premier composant de multi-diffusion (460) pour relire les informations d'état de multi-diffusion sélectives enregistrées pour reconstruire la table de topologie (435) dans le cadre d'une technique de récupération NSF pour permettre un redémarrage et une récupération efficaces de la panne du plan de commande sans perte de connectivité de données par le routeur (400) dans le réseau ;
dans lequel les informations d'état de multi-diffusion sélectives comprennent des informations d'événements guidées par les données (514) adaptées pour entraîner des changements dans les messages d'état et de commande échangées entre le routeur de multi-diffusion et ses voisins dans le réseau informatique.

2. Système selon la revendication 1, dans lequel le premier composant de multi-diffusion est un protocole de routage multi-diffusion s'exécutant dans le plan de commande (410) du routeur (400).

3. Système selon la revendication 2, dans lequel le protocole de routage multi-diffusion est un protocole de routage PIM multi-diffusion indépendant (430).

4. Système selon la revendication 3, dans lequel la table de topologie est une table de topologie PIM (435).

5. Système selon la revendication 1, dans lequel les informations d'état de multi-diffusion sélectives comprennent des informations de mappage d'adresses de plage de groupe à point de rendez-vous (512) adaptées pour fournir une identité d'un point de rendez-vous pour chaque groupe multi-diffusion de récepteurs qui souhaite recevoir des messages destinés à une adresse de groupe multi-diffusion .

6. Système selon la revendication 1, dans lequel les informations d'état de multi-diffusion sélectives (518) comprennent des informations de transfert à trajectoire inverse qui spécifient des adresses des routeurs du saut précédent pour des sources et des points de rendez-vous sur le réseau.

7. Système selon la revendication 1, dans lequel le premier composant de multi-diffusion est un protocole de routage PIM multi-diffusion multicast indépendant (430) s'exécutant dans le plan de commande (410) du routeur (400), et dans lequel les un ou plusieurs seconds éléments de multi-diffusion sont une base d'informations de transfert multi-diffusion (MFIB) (480) s'exécutant dans un plan de données (470) du routeur (400).

8. Système selon la revendication 7, dans lequel la récupération NSF comprend une pluralité de phases ayant une séquence de synchronisation associée.

9. Système selon la revendication 8, dans lequel une première phase de récupération NSF comprend une phase de gel de la MFIB (480) pour faire basculer la MFIB en mode NSF et pour geler le contenu d'une table de transfert MFIB (700) afin de préserver les routes obsolètes dans le plan de données (470), assurant ainsi la poursuite de flux de données de multi-diffusion continue à travers le routeur (400) pour des routes préexistantes.

10. Système selon la revendication 9, dans lequel une deuxième phase de récupération NSF comprend une phase de redémarrage de processus pour redémarrer des composants du plan de commande en panne (410) en mode NSF dans un laps de temps défini.

11. Système selon la revendication 10, dans lequel le composant de plan de commande en panne est le protocole de routage PIM (430).

12. Système selon la revendication 11, dans lequel une troisième phase de récupération NSF comprend une phase de récupération de suivi et d'enregistrement de données de façon permanente pour relire une première partie des informations d'état de multi-diffusion sélectives.

13. Système selon la revendication 12, dans lequel la première partie des informations d'état de multi-diffusion sélectives comprend des informations de mappage d'adresses de plage de groupe à point de rendez-vous (512) et des informations de transfert à trajectoire inverse (518).

14. Système selon la revendication 12, dans lequel une quatrième phase de récupération NSF comprend une phase de rétablissement d'adjacence de protocole pour établir une communication de trafic de contrôle avec des protocoles de routage homologues dans des routeurs voisins du réseau informatique avant de retourner à la troisième phase pour relire une partie restante des informations d'état de multi-diffusion sélectives.

15. Système selon la revendication 14, dans lequel la partie restante des informations d'état de multi-diffusion sélectives comprend des signaux d'événement guidés par les données.

16. Système selon la revendication 14, dans lequel une cinquième phase de récupération NSF comprend une phase de rafraîchissement de la MFIB pour établir une connexion de communication entre MFIB (480) et PIM (430) et pour mettre à jour le contenu de la table de transfert MFIB (700).

17. Système selon la revendication 16, dans lequel une sixième phase de récupération NSF comprend une phase d'achèvement NSF pour faire basculer MFIB (480) et PIM (430) en mode normal, achevant ainsi la récupération NSF.

18. Procédé pour la préservation du transfert de données multi-diffusion pendant la récupération du transfert NSF en continu après une panne dans un plan de commande (410) d'un routeur de multi-diffusion (400) au sein d'un réseau informatique, le procédé étant **caractérisé par** les étapes consistant à :
surveiller et enregistrer des informations d'état de multi-diffusion sélectives de façon permanente au niveau du plan de contrôle (410) pendant le fonctionnement correct du routeur (400) pour une récupération et une utilisation ultérieures lors de la reconstruction du contenu d'une table de topologie pendant la récupération NSF ; et
redémarrer un composant de plan de commande de multi-diffusion en panne comprenant la relecture des informations sélectives enregistrées pour reconstruire la table de topologie dans le cadre d'une technique de récupération NSF qui permet une récupération efficace de la panne du plan de commande sans perte de connectivité de données par le routeur (400) dans le réseau,
dans lequel les informations d'état de multi-diffusion sélectives comprennent des informations d'événements guidées par les données (514) qui provoquent des changements dans les messages d'état et de commande échangés entre le routeur de multi-diffusion et ses voisins dans le réseau informatique.

19. Procédé selon la revendication 18, dans lequel l'étape de redémarrage comprend l'étape consistant à fournir une pluralité de phases de récupération NSF ayant des séquences de synchronisation associées.

20. Procédé selon la revendication 18, dans lequel les informations d'état de multi-diffusion sélectives comprennent des informations de mappage d'adresses de plage de groupe à point de rendez-vous (512) qui fournissent l'identité d'un point de rendez-vous pour chaque groupe multi-diffusion de récepteurs qui souhaite recevoir des messages destinés à une adresse de groupe multi-diffusion .

21. Système selon la revendication 18, dans lequel les informations d'état de multi-diffusion sélectives (518) comprennent des informations de transfert à trajectoire inverse qui spécifient des adresses des routeurs du saut précédent pour des sources et des points de rendez-vous sur le réseau.

22. Programme informatique ou support lisible par ordinateur contenant des instructions de programme exécutables pour exécuter un procédé selon l'une quelconque des revendications 18 à 21.
